# FASCICULE DE BREVET EUROPEEN

(11) **EP 4 526 119 B1**
(45) Date de publication et mention de la délivrance du brevet: **18.03.2026**
(21) Numéro de dépôt: 23726360.3
(22) Date de dépôt: 11.05.2023
(51) Int. Cl.: B32B 17/10, B32B 27/20, B32B 27/30

(54) **VITRAGE DE TOIT FEUILLETÉ POUR AUTOMOBILE**
LAMINIERTE DACHVERGLASUNG FÜR EIN KRAFTFAHRZEUG
LAMINATED ROOF GLAZING FOR A MOTOR VEHICLE

(30) Priorité: 16.05.2022 FR 2204628
(43) Date de publication de la demande: 26.03.2025
(73) Titulaire: Saint-Gobain Sekurit France, 60150 Thourotte (FR)
(72) Inventeur: WILMET, Maxence, 93300 Aubervilliers (FR); DALENCOURT, Anaïs, 93300 Aubervilliers (FR); PIRE, Myriam, 93300 Aubervilliers (FR); TEISSEIRE, Jeremie, 93300 Aubervilliers (FR)
(74) Mandataire: Saint-Gobain Recherche
(86) Numéro de dépôt international: PCT/EP2023/062662
(87) Numéro de publication internationale: WO 2023/222520

(56) Documents cités:
- WO-A1-2020/193363
- US-A1- 2011 300 356

## Description

L'invention concerne un vitrage pour automobile et notamment pour une utilisation comme vitre de toit automobile.

Les vitrages en verre utilisés comme toit panoramique ouvrant ou fixe dans les véhicules doivent respecter un certain nombre de critères, vis-à-vis de l'échauffement de l'intérieur du véhicule sous forte insolation:
- d'une part ne pas laisser passer la totalité du rayonnement solaire incident pour ne pas échauffer excessivement l'espace intérieur du véhicule et/ou limiter la consommation énergétique (due par exemple à une utilisation excessive de l'air conditionné en raison de la quantité de chaleur entrant dans l'habitacle), et
- d'autre part laisser passer une quantité minime de lumière pour éclairer suffisamment l'espace intérieur et assurer un minimum de visibilité extérieure pour maintenir un confort visuel et une sensation de confort.

Par ailleurs, le respect de ces deux exigences, à savoir empêcher l'entrée excessive de rayonnement énergétique et éclairer suffisamment l'espace intérieur, est nécessairement le résultat d'un compromis. Il existe donc une demande pour des vitres feuilletées ayant le meilleur compromis en termes de réflexion de l'énergie thermique tout en conservant une certaine transparence à la lumière.

La réduction du CO₂ est aujourd'hui un enjeu majeur de l'industrie. Par exemple, dans le cadre des économies d'énergie en matière de CO₂, le Code of Federal Regulation des Etats-Unis (CFR, https://www.law.cornell.edu/cfr /text/40/86.1869-12) accorde ainsi des crédits de CO₂ aux constructeurs automobiles du marché de l'ALENA (NAFTA) pour les technologies de réduction du CO₂ hors cycle, notamment impliquant les revêtements réfléchissants les IR ou le verre absorbant la chaleur. Ainsi un vitrage du toit panoramique présente une surface extérieure très exposée à la lumière directe du soleil, ce qui provoque chaleur et éblouissement si le verre ne comprend pas de tels revêtements ou n'est pas teinté dans sa masse.

L'objectif technique de la présente invention est de limiter l'éblouissement en diminuant la transmission de la lumière à travers le verre, et également d'améliorer les performances anti-solaires dans les vitrages automobiles, et en particulier ceux utilisés comme toit, de manière à éviter un échauffement de l'espace intérieur de l'habitacle notamment en conditions de fortes chaleurs extérieures.

Pour évaluer la transmission de la chaleur à travers un vitrage feuilleté, on mesure souvent la transmission totale solaire (TTS) selon la norme ISO 13837 avec la convention "A" AM 1.5. Les performances anti-solaires sont donc mesurées par l'énergie solaire totale transmise (TTS) pour ce type de vitrage.

Pour évaluer la transmission lumineuse à travers le vitrage dans le domaine du visible (380-780 nm), on peut utiliser par exemple la transmission lumineuse T_{L} telle que mesurée selon la norme ISO9050 (2003).

L'abaissement de la T_{L} peut être réalisée par absorption. Selon les techniques actuelles, l'absorption est obtenue par l'utilisation dans le vitrage d'une feuille de verre teintée dans sa masse ou alternativement ou en complément d'une ou plusieurs couches de PVB teintées, au sein d'un vitrage feuilleté, c'est-à-dire constitué de plusieurs feuilles de verre assemblées. Cependant, de telles réalisations conduisent à l'échauffement du vitrage.

Un autre facteur important concernant les vitrages antisolaires et leur capacité à éviter l'échauffement de l'habitacle intérieur est leur aptitude à réfléchir les infrarouges. Habituellement, une telle capacité est obtenue grâce des empilements de couches minces (c'est-à-dire dont l'épaisseur est de l'ordre de quelques nanomètres ou quelques dizaines de nanomètres) dont l'une présente un fort coefficient de réflexion dans l'infrarouge. Cette capacité est généralement obtenue par un empilement comprenant au moins une et de préférence deux ou même trois couches en argent de quelques nanomètres d'épaisseurs séparées par des couches de matériaux diélectriques, notamment du type de ceux décrit dans les demandes WO2005/051858 ou encore WO2013/104439 à laquelle on se réfèrera pour plus de précisions sur de tels empilements.

La capacité d'un vitrage équipé de tels empilements à réfléchir les infrarouges est par exemple mesurée par l'émissivité totale à incidence normale εₙ, telle que mesurée selon la norme NF EN 12898 (2001). Plus l'émissivité εₙ est faible, plus le vitrage réfléchit les infrarouges.

Pour satisfaire les objectifs décrits précédemment, plusieurs configurations de structures feuilletées ont déjà été décrites.

Selon une première possibilité, on connait, de la publication WO 2006/108980A2, l'utilisation de verres teintés qui absorbent une partie du rayonnement et qui bloquent par filtrage une majeure portion du spectre du rayonnement incident, sans distinction entre les différentes parties du spectre solaire (UV-Visible-proche IR).

Selon d'autres configurations possibles, il a été proposé d'utiliser un intercalaire teinté liant les deux feuilles de verre également optionnellement teintées, notamment un feuillet de PVB (polyvinylbutyral) teinté. On pourra par exemple également se référer à la publication EP0687554A1 pour un exemple d'une telle configuration.

Le fascicule du brevet US6910729 décrit alternativement un vitrage à effet de confort thermique associant un verre électrochrome avec une couche à faible émissivité disposée sur la surface tournée vers l'espace intérieur du véhicule. La demande de brevet EP 1060876 A2 décrit selon une autre solution un vitrage feuilleté constitué par une feuille de verre extérieure, un empilement de protection solaire comprenant deux couches d'argent disposé en face 2 (les faces étant numérotées depuis l'extérieur vers l'intérieur), un feuillet de PVB clair, un feuillet de PVB teinté, et une feuille de verre intérieure, sur laquelle est déposée une couche bas-émissive d'oxyde d'étain dopé au fluor.

Egalement, diverses et autres combinaisons des systèmes précédents (PVB et/ou verre teintés) ont été proposées. On obtient ainsi en général au final des valeurs de la transmission lumineuse T_{L} de l'ordre de 8 à 20% pour un facteur TTS de l'ordre de 20 à 35%.

Si de telles valeurs donnent globalement satisfaction, les solutions proposées jusqu'à présent sont cependant chères et complexes à mettre en œuvre et le prix du vitrage final est relativement élevé, en raison notamment du prix élevé d'un verre teinté dans sa masse et/ou d'un PVB (ou un autre intercalaire) teinté dans sa masse. Par teinté dans la masse, on entend que le colorant est introduit lors d'une étape de fabrication du produit (verre ou PVB) de manière à être réparti de façon homogène dans tout le volume dudit produit, par opposition à un verre clair ou un PVB clair qui ne contient pas de tels colorants.

Cependant, les solutions actuelles telles que décrites précédemment, apparaissent relativement chères et complexes à mettre en œuvre. Elles conduisent en outre à abaisser conjointement et sans sélectivité possible la TTS et la TL. En outre, la sélection de basses valeurs de la TL et de la TTS ne peut souvent être obtenue sans une augmentation conjointe de l'émissivité du vitrage. WO 2020/193363 A1 divulgue un vitrage feuilleté comprenant une feuille en verre clair extérieure et une feuille en verre clair intérieure qui sont liées l'une à l'autre au moyen d'un intercalaire, comprenant la succession des éléments suivants, depuis l'intérieur vers l'extérieur dudit vitrage: -ladite feuille intérieure de verre clair; un empilement de couches réfléchissant le rayonnement infrarouge compris entre 780 et 2500 nm; ledit intercalaire comprenant (a) un premier feuillet comprenant ou constitué d'une couche d'un composé polymérique ou d'un vernis, ledit composé polymérique ou ledit vernis comprenant un agent colorant, ledit agent colorant absorbant sensiblement la totalité de la lumière située dans le domaine du visible entre 380 et 780 nm et étant sensiblement transparent au rayonnement infrarouge, notamment de longueur d' onde compris entre 800 et 2000 nm, et (b) un second feuillet d'une matière plastique non teintée dans sa masse, de préférence thermoplastique, notamment un PVB clair; ladite feuille extérieure de verre clair.

Afin d'obtenir le meilleur compromis TL/TTS/émissivité, un vitrage est recherché, qui présente un profil d'absorption tout aussi efficace mais dont la fabrication est beaucoup moins complexe que ceux de l'art antérieur, et en particulier ne nécessitant pas l'utilisation de verre ou de PVB teinté dans leur masse. La fourniture d'un tel vitrage est l'objet de la présente invention.

En particulier, selon la présente invention, il est recherché de préférence des vitrages présentant conjointement les spécifications qui suivent :
- une TTS de l'ordre de 20% ou moins, ou même de moins de 10%,
- une transmission lumineuse T_{L} inférieure à 10% ou même inférieure à 5% et de préférence encore de l'ordre de 1 à 2%,
- une émissivité εₙ la plus faible possible et en particulier inférieure ou égale à 30%.

Le problème à la base de l'invention est donc de proposer un verre facile et économique à fabriquer, en particulier qui peut même ne pas comprendre de verre teinté et/ou de PVB teinté dans sa masse, pouvant en particulier servir de toit pour automobile, qui permet de répondre au compromis recherché entre TTS, TL et émissivité, en particulier une transmission lumineuse dans le visible T_{L} inférieure à 10%, notamment de l'ordre de 1 à 2% et un facteur TTS inférieur à 20%, et une émissivité faible, en particulier inférieure ou égale à 30%.

Le problème technique précédent est résolu grâce au vitrage feuilleté selon l'invention.

Un tel vitrage comprend deux feuilles en verre dont au moins une première feuille de verre et une seconde feuille de verre, liées l'une à l'autre au moyen d'un intercalaire, ledit vitrage comprenant la succession des éléments suivants:
- ladite première feuille de verre, celle-ci étant constituée de verre clair,
- un premier empilement de couches réfléchissant le rayonnement infrarouge, en particulier à partir de 780nm et de préférence l'infrarouge solaire entre 780 nm et 2000 nm, ledit empilement étant de préférence au contact de la surface intérieure de ladite première feuille en verre clair,
- ledit intercalaire, de préférence constitué de PVB, de préférence déposé au contact dudit empilement de couches,
- ladite seconde feuille de verre déposée au contact dudit intercalaire,
- un second empilement de couches réfléchissant le rayonnement infrarouge, en particulier à partir de 780nm et jusque dans l'infrarouge thermique (entre 3 et 50 micromètres), au contact de la surface intérieure de ladite seconde feuille en verre clair,
- une couche polymérique, de préférence déposée directement sur l'empilement de couches ou alternativement déposée par l'intermédiaire d'un agent promoteur d'adhésion avec ledit empilement, ladite couche polymérique comprenant un agent colorant, ledit agent colorant absorbant la lumière située dans le domaine du visible (entre 380 et 780 nm) et étant sensiblement transparente au rayonnement infrarouge de longueur d'onde supérieur à 780 nm, ladite couche polymérique étant de préférence directement au contact de l'environnement extérieur (c'est-à-dire qu'elle est le dernier élément de ladite succession, sans feuille de verre, couche ou empilement la recouvrant).

Les termes « extérieurs » et « intérieurs » font référence au positionnement du vitrage dans le véhicule qu'il équipe.

La face externe de la feuille de verre est nue selon l'invention (c'est-à-dire directement au contact de l'air extérieur au véhicule).

Des caractéristiques supplémentaires et avantageuses d'un tel vitrage sont données ci-après qui peuvent bien évidemment être combinées entres elles le cas échéant :
- Ledit colorant présente, tel que mesuré par un spectrophotomètre Perkin-Elmer lambda 950 à 25°C, un spectre d'absorption entre 380 et 2000 nm pour une couche de 40 micromètres dans un polymère (meth)acrylate et à une concentration de 1% massique, une absorbance moyennée entre 780 et 2000 nm au moins 3 fois inférieure à l'absorbance moyennée entre 380 et 780 nm et de préférence au moins 5 fois inférieure, voire au moins 7 fois inférieure.
- Ledit colorant est noir ou sensiblement noir.
- Ledit colorant présente à 25°C, un coefficient d'extinction molaire (ou absorptivité molaire) moyen entre 780 nm et 2000 nm au moins 3 fois inférieur au coefficient d'extinction molaire moyen entre 380 nm et 780 nm et de préférence encore au moins 5 fois inférieur, ou même au moins 7 fois inférieur. De façon bien connue, le coefficient d'extinction molaire, également appelé absorptivité molaire ou coefficient d'absorption molaire, caractérise les capacités d'une composition à absorber la lumière. La loi de Beer-Lambert stipule qu'elle ne dépend pas de la concentration de la composition ni de l'épaisseur traversée par la lumière mais de la nature du soluté (ici le colorant) et du solvant (ici la matrice), de la longueur d'onde de la lumière incidente et de la température. Un coefficient d'extinction molaire « moyen » correspond ainsi au sens de la présente invention à la moyenne desdits coefficients, telle que mesurée sur l'intervalle de longueur d'onde considéré.
- L'empilement de couches réfléchissant le rayonnement infrarouge est un empilement comprenant au moins deux couches fonctionnelles à base d'argent, de préférence au moins 3 couches fonctionnelles à base d'argent, séparées par des couches de matériaux diélectriques, en particulier par des oxydes ou des nitrures.
- La couche de polymère comprend ou de préférence est constituée par un composé polymérique choisi parmi les composés (métha)crylate, de préférence polyfonctionnels et comprenant au moins deux fonctions acrylates.
- La couche de polymère est obtenue par réticulation d'une composition polymérisable comprenant des composés (méth)acrylates comprenant éventuellement un groupe polyorganosiloxane, un amorceur de polymérisation, et éventuellement un promoteur d'adhésion, dans lequel lesdits composés (méth)acrylates comprennent des composés (méth)acrylates à fonctionnalité élevée :
   - ayant au moins 4 fonctions (méth) acrylates et représentant, en masse par rapport à la masse totale de ladite composition, par ordre de préférence croissant, au moins 65 %, au moins 70 %, au moins 80 %, au moins 90 %, au moins 94% ou
   - ayant au moins 5 fonctions (méth) acrylates et représentant, en masse par rapport à la masse totale de ladite composition, par ordre de préférence croissant, au moins 50 %, au moins 60 %, au moins 70 %, au moins 80 %, au moins 90%, au moins 94% de ladite composition.
   - De préférence, la composition polymérisable comprend des composés (méth)acrylates à fonctionnalité élevée ayant au moins 6 fonctions (méth)acrylates et représentant par ordre de préférence croissant, au moins 50 %, au moins 60 %, au moins 70 %, au moins 80 %, au moins 90%, au moins 94% de ladite composition.

On entend par (méth)acrylate, un acrylate ou un méthacrylate. On entend par fonctions (méth)acrylate une fonction acrylate (CH2=CH-COO-) ou une fonction méthacrylate (CH2=CH(CH3)-COO-).

La couche polymérique est essentiellement de nature organique. Elle est obtenue à partir d'une composition polymérisable. Elle résulte de la réticulation des composés organiques polymérisables présents dans la composition polymérisable.

Les composés (méth)acrylates représentent en masse par rapport à la masse totale de la couche polymérique, par ordre de préférence croissant :
- au moins 50 %, au moins 60 %, au moins 70 %, au moins 80 %, au moins 90 %, au moins 95 %, et/ou
- au plus 99 %, au plus 98 %, au plus 97 %, au plus 96 %, au plus 95 %.

Les composés (méth)acrylates présentent une masse moléculaire ou masse moléculaire moyenne (ci-après masse moléculaire) comprise entre 150 à 10000 g/mol.

Les composés (méth)acrylates comprennent des composés (méth)acrylates à fonctionnalité élevée. Ces composés à fonctionnalité élevée sont choisis parmi les esters de l'acide acrylique ou méthacrylique comportant, par ordre de préférence croissant, au moins 4, au moins 5, au moins 6 fonctions (méth)acrylate.

Les composés (méth)acrylates comprenant des composés (méth)acrylates à fonctionnalité élevée présentent une masse moléculaire, par ordre de préférence croissant, comprise entre de 500 à 10000, comprise entre 800 et 5000, comprise entre 1000 et 2000 g/mol.

Selon un mode de réalisation avantageux, les composés (méth)acrylates à fonctionnalité élevée comporte au moins 4 fonctions (méth)acrylate. Ils représentent, en masse par rapport à la masse totale de la couche polymérique, par ordre de préférence croissant, au moins 65 %, au moins 60 %, au moins 70 %, au moins 80 %, au moins 90 %, au moins 94%.

Selon un autre mode de réalisation avantageux, les composés (méth)acrylates à fonctionnalité élevée ayant au moins 5 fonctions (méth)acrylates représentent, en masse par rapport à la masse totale de la couche polymérique, par ordre de préférence croissant, au moins 50 %, au moins 60 %, au moins 70 %, au moins 80 %, au moins 90%, au moins 94%

Selon un autre mode de réalisation avantageux, les composés (méth)acrylates à fonctionnalité élevée ayant au moins 6 fonctions (méth)acrylates représentent, en masse par rapport à la masse totale de la couche polymérique, par ordre de préférence croissant, au moins 50 %, au moins 60 %, au moins 70 %, au moins 80 %, au moins 90%, au moins 94%.

Avantageusement, les composés (méth)acrylates a) comprennent des composés (méth)acrylates à fonctionnalité élevée comportant au moins 6 fonctions (méth)acrylate et une masse moléculaire allant de 1000 à 2000 g/mol. A titre d'exemple, on peut citer le produit CN9010EU commercialisé par la société Sartomer qui est un prépolymère uréthane-acrylate aliphatique comportant 6 fonctions (méth)acrylates et une masse moléculaire de 1450 g/mol.

Selon des modes de réalisations avantageux de l'invention, ladite composition polymérisable présente en outre les caractéristiques suivantes :
- elle comprend au moins un amorceur (ou initiateur) de polymérisation, de préférence un photoinitiateur,
- l'amorceur de polymérisation représente 0,1 à 20 %, ou 1 à 15 %, de préférence 3 à 10 % et mieux 4 à 8 % en masse de ladite composition,
- les composés (méth)acrylates a) sont choisis parmi des monomères, des oligomères, des prépolymères ou des polymères comprenant au moins une fonction (méth)acrylate,
- les composés (méth)acrylates sont choisis parmi les esters de l'acide acrylique ou méthacrylique comportant au moins deux fonctions (méth)acrylate,
- les composés (méth)acrylates comprennent éventuellement au moins un oligomère uréthane-acrylique aliphatique,
- les composés (méth)acrylates comprennent au moins un monomère oligomère ou prépolymère comportant, par ordre de préférence croissant, au moins 2, au moins 3, au moins 4, au moins 5, au moins 6 fonctions (méth)acrylate,
- la composition polymérisable peut comprendre en outre au moins un additif choisi parmi les promoteurs d'adhésion, les plastifiants, les absorbeurs, les agents de séparation, les stabilisants à la chaleur et/ou à la lumière, les agents épaississants ou les modificateurs de surface,
- la somme de tous les additifs est comprise entre 0 et 10 %, de préférence 0 et 5 %, voire 0,5 à 2,5 % en masse par rapport à ladite composition.

Selon un mode de réalisation avantageux, la composition polymérisable comprend au moins un composé supplémentaire comprenant un groupe polyorganosiloxane et au moins deux fonctions (méth)acrylates.

Selon l'invention, les amorceurs de polymérisation et le composé comprenant un groupe polyorganosiloxane ne sont pas considérés comme des additifs.

Le composé supplémentaire comprenant un groupe polyorganosiloxane présente par exemple une masse moléculaire comprise entre 500 à 10000 g/mol. Avantageusement, ledit composé supplémentaire présentent une masse moléculaire, par ordre de préférence croissant, comprise entre de 500 à 15000, comprise entre 1000 et 10000, comprise entre 3000 et 7000 g/mol. Les masses moléculaires peuvent être déterminées par chromatographie à perméation de gel.

Ledit composé supplémentaire représente 0,05 à 5 %en poids de la composition polymérisable.

Le composé comprenant un groupe polyorganosiloxane représente, par ordre de préférence croissant, 0,05 à 5%, 0,1 à 4 %, 0,2 à 3%, 0,3 à 2%, 0,3 à 1,5 % de la masse totale de la couche de protection organique.

Le groupe polyorganosiloxane du composé comprenant un groupe polyorganosiloxane est constitué de 2 à 1000 unités organosiloxane. Ce groupe polyorganosiloxane peut faire partie de la chaîne principale du composé ou faire partie d'une chaine latérale.

Le composé comprenant un groupe polyorganosiloxane peut être choisi parmi les polyorganosiloxanes modifiés comportant une pluralité de fonctions (méth)acrylates. Ce type de composé correspond à un composé ayant au moins deux fonctions (méth)acrylates introduites dans n'importe quelle position d'une chaine (ou squelette) polyorganosiloxane, notamment sur une chaîne latérale ou en extrémité de la chaine principale. Dans ce cas, le composé comprenant un groupe polyorganosiloxane représente, par ordre de préférence croissant, 0,05 à 1,5 %, 0,1 à 1 %, 0,2 à 0,7 %, 0,4 à 0,6 % en masse de ladite composition. Ce type de composé est par exemple commercialisé sous la dénomination Byk 3505.

Le composé comprenant un groupe polyorganosiloxane peut être choisi parmi les poly(méth)acrylate modifiés comportant des groupes polyorganosiloxanes et moins deux fonctions (méth)acrylates. Ce type de composé est par exemple commercialisé par la société Sartomer sous la dénomination CN9800 (« oligomère silicone acrylate aliphatique difonctionnel »). Dans ce cas, le composé comprenant un groupe polyorganosiloxane représente, par ordre de préférence croissant 0,2 à 4 %, 0,4 à 3%, 0,6 à 2%, 0,9 à 1,6 % en masse de ladite composition.
- l'épaisseur de la couche polymérique est comprise entre 0,1 et 25 micromètres, de préférence entre 0,1 et 20 micromètres, notamment entre 0,2 et 10 micromètres, ou même entre 0,2 et 5 micromètres et de manière très préférée entre 0,5 et 3 micromètres.
- L'agent colorant est choisi parmi les composés de la gamme Epolight 7527^{®}, en particulier les composés 7527B et Epolight 7527C commercialisés par la société Epolin.
- L'agent colorant est choisi parmi le Sudan Black B^{®} ((2,2-dimethyl-1,3-dihydroperimidin-6-yl)-(4-phenylazo-1-naphthyl)diazene, C₂₉H₂₄N₆, CAS 4197-25-5) ou la Nigrosine Solvent black 5 (CAS 11099-03-9), et de préférence est le Sudan Black B^{®}.
- L'agent colorant représente entre 5 et 70% poids dudit polymère, de préférence entre 10 et 60% poids et de manière préférée entre 20 et 50% poids dudit polymère.
- Les feuilles de verre ont une épaisseur comprise entre 0,7 mm et 5 mm et de préférence entre 1,6 mm et 3,1 mm.
- Les empilements de couches sont un système de couches minces d'épaisseurs comprises entre 0,5 et 100 nm qui comprend une ou plusieurs couches à base d'argent séparées par des couches diélectriques, de préférence qui comprend au moins deux couches à base d'argent, de préférence encore qui comprend trois couches à base d'argent.

L'invention se rapporte également à une utilisation d'un vitrage feuilleté tel que précédemment décrit comme toit, vitre latérale, ou lunette arrière de véhicules automobiles. Egalement, l'invention porte sur un procédé de fabrication d'un vitrage tel que décrit précédemment.

Plus particulièrement, un tel procédé de fabrication d'un vitrage feuilleté comprend les étapes suivantes :
- dépôt par les techniques de pulvérisation cathodique sous vide d'un empilement de couches réfléchissant les infrarouges tel que décrit précédemment, sur la face interne d'une première feuille de verre intérieure,
- éventuellement mise en forme dudit vitrage telle qu'un bombage ou une trempe,
- assemblage de la première feuille de verre revêtu dudit empilement avec un intercalaire thermoplastique transparent coloré ou non coloré, en particulier en PVB, et avec une deuxième feuille de verre colorée ou claire, ladite deuxième feuille de verre comprenant sur sa face opposée un empilement de couches réfléchissant les infrarouges,
- dégazage pendant lequel l'air piégé entre les feuilles de verre et l'intercalaire thermoplastique est éliminé,
- traitement thermique sous pression et/ou sous vide du verre feuilleté à une température comprise entre 60 et 200°C,
- dépôt sur ledit empilement d'une couche polymérique comprenant un agent colorant tel que décrit précédemment, ledit agent colorant absorbant la lumière située dans le domaine du visible et étant transparent aux infrarouges,
- séchage et/ou durcissement de la couche polymérique comprenant l'agent colorant, en particulier par traitement UV.

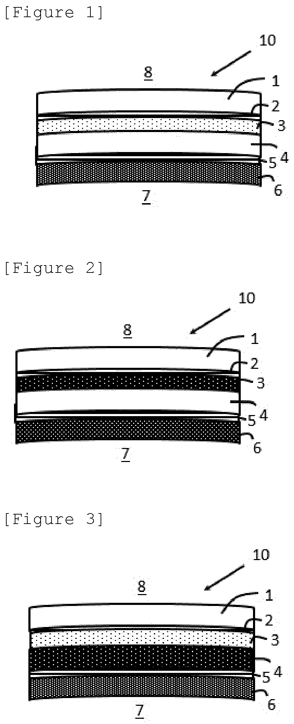

A titre d'exemple non limitatif et pour une meilleure compréhension de la présente invention, on a représenté sur les figures 1 à 3 jointes en annexe trois modes de réalisation d'un vitrage 10 selon l'invention, vu selon une coupe transversale.

Ces modes de réalisation sont particulièrement adaptés à la réalisation d'une structure de toit vitré pour automobile mais pourrait également être utilisé en tant que lunette arrière, voire comme vitrage latéral.

Le vitrage 10 selon l'invention comprend une première feuille de verre clair 1 c'est à dire non teintée dans sa masse. En particulier, un tel vitrage est classiquement obtenu par un procédé float. De tels verres non teintés peuvent notamment présenter une transmission lumineuse T_{L} d'au moins 88%, et le plus souvent de l'ordre de 90%.

Le vitrage 10 sépare l'espace intérieur 7 de l'extérieur 8 du véhicule et peut être bombé comme représenté sur la figure 1.

La feuille de verre a une épaisseur comprise de préférence entre 1 mm et 8 mm, en particulier entre 1,5 et 4 mm. Pour des raisons d'économie de poids, la feuille de verre unique doit permettre d'atteindre un compromis aussi bon que possible entre une faible épaisseur et une forte sécurité, en particulier lorsque le vitrage est monté dans une automobile. Un tel compromis peut être obtenu notamment avec une feuille de verre dont l'épaisseur est comprise entre 1,5 mm et 3,1 mm, par exemple de 2,1 mm.

Selon l'invention, la face externe de la feuille de verre 1 est de préférence nue, tandis que sur la partie interne de la feuille 1 est déposé un premier empilement 2 de couches réfléchissant sélectivement les infrarouges. De tels empilements sont bien connus et en particulier comprennent une combinaison de couches à base de métaux précieux, de préférence à base d'argent, et de matériaux diélectriques souvent appelées couches interférentielles. De manière connue, ces empilements sont constitués d'une succession de couches de matériaux diélectriques tels que des oxydes et/ou des nitrures et de couches métalliques dont des couches à base d'argent dont les propriétés dites « bas émissives » permettent de réfléchir sélectivement l'infrarouge, en particulier l'infrarouge dit solaire (de longueur d'onde compris entre 780 nm et 2500 nm) et de laisser passer au moins en partie et de préférence plus de 70%, voire plus de 80% de la lumière visible du spectre solaire (de longueur d'onde compris entre 380 et 780 nm), notamment en minimisant la réflexion lumineuse au moyen desdites couches interférentielles ou de combinaison(s) de couches interférentiels.

Les empilements selon l'invention sont notamment sélectionnés de telle façon que leur résistance par carré soit inférieure à 1,5 Ohms par carré, de préférence encore inférieure à 1,2 Ohms par carré, voire même inférieure à 1,1 Ohms par carré. La résistance par carré peut par exemple être mesurée à l'aide d'un appareil type SRM-14T de Nagy Mess-systems.

De tels empilement peuvent comprendre jusqu'à plusieurs dizaines de couches dont l'épaisseur est de l'ordre de 1 à 30 nm et sont à l'heure actuelle déposées par les techniques dites de pulvérisation cathodique, souvent assistées par magnétron.

Les empilements préférés selon l'invention comprennent deux, et de préférence trois ou même quatre couches à base d'argent.

Des exemples de tels empilements sont notamment décrits dans les publications WO2005/051858A1, WO2013/104439 ou encore WO2013/107983 citée précédemment.

La feuille de verre intérieure 1 munie de l'empilement 2 est ensuite liée solidairement à une seconde feuille de verre 4 par un intercalaire 3.

L'intercalaire 3 comprend au moins un feuillet intermédiaire d'un matériau plastique clair (c'est-à-dire dans lequel aucun colorant n'a été ajouté pour la teinter, c'est-à-dire pour en faire varier la couleur ou la quantité de lumière la traversant). Ce feuillet intermédiaire est, de manière connue, fondu en autoclave entre les deux feuilles de verre pour les lier entres elles. Le polyvinylbutyral (PVB), qui peut être éventuellement acoustique, s'est avéré être le matériau qui convient le mieux pour constituer un tel feuillet intermédiaire 3, et on l'utilise dans la plupart des cas en des épaisseurs de 0,38 mm ou de 0,76 mm.

En remplacement du PVB on peut aussi utiliser selon l'invention tous les autres matériaux connus pour constituer un feuillet intermédiaire fondu entre deux feuilles de verre, par exemple des thermoplastiques tels que des copolymères d'éthylène et d'acétate de vinyle (EVA), le polyuréthane (PU) ou le poly(chlorure de vinyle) (PVC).

Alternativement mais de façon moins préférée, le feuillet de PVB peut être remplacé par un feuillet constitué d'un système de couches comprenant par exemple une couche de support en poly(téréphtalate d'éthylène) (PET) incorporé entre deux couches de PVB. De cette manière, on obtient un feuillet en trois couches pour relier les verres individuels 1, 4 en une structure feuilletée.

Selon un mode de réalisation privilégié, l'intercalaire 3 est un feuillet de polyvinylbutyral (PVB) ou un ensemble de plusieurs feuillets de polyvinylbutyral présentant des duretés différentes en vue d'obtenir des propriétés d'isolation acoustique, comme par exemple décrit dans la publication EP1800855.

Selon un premier mode de réalisation illustré par la figure 1, le PVB est clair, c'est-à-dire qu'il ne contient pas de colorant et est sensiblement transparent à la lumière visible. Selon un second mode de réalisation illustré par la figure 2, le PVB est coloré dans sa masse, c'est-à-dire qu'il absorbe au moins une partie de la lumière visible.

La deuxième feuille de verre 4 peut être identique ou différente de la première, notamment en terme d'épaisseur.

Sur la représentation de la figure 1, il s'agit également d'un verre clair. Selon une autre alternative décrite selon la figure 3, il s'agit d'un verre coloré dans sa masse, par exemple un verre VG10 (Venus Grey 10 ^{™}) de la société déposante.

L'utilisation d'un PVB coloré ou d'un verre coloré permet de diminuer la transmission lumineuse à travers le vitrage.

Au-dessus de la deuxième feuille de verre est déposé un second empilement 5 de couches réfléchissant sélectivement les infrarouges, qui peut être identique ou différent du premier empilement 2.

Au-dessus du deuxième empilement de couches est déposé une couche supplémentaire 6, constituée par une couche d'un composé polymère. Préférentiellement, un tel polymère peut être ou comprendre un polymère du type (métha)crylate, notamment du type décrit dans les publications WO2018/178559, WO2018/178547 ou encore WO2018/115768, WO2020/016527 ou de préférence encore tel que décrit dans la demande WO2020/016529 comme décrit précédemment.

Selon l'invention la couche polymérique 6 peut être avantageusement obtenue à partir d'une composition liquide comprenant des oligomères (méth)acrylates comprenant au moins une fonction méthacrylate et de préférence une pluralité de fonctions méthacrylates. Par exemple, la composition liquide peut avantageusement comprendre au moins un oligomère acrylique aliphatique, au moins un initiateur de polymérisation et l'agent colorant.

Selon l'invention la couche polymérique 3 peut être avantageusement obtenue à partir d'une composition liquide comprenant des composés (méth)acrylates choisis parmi des monomères, des oligomères, ou des polymères comprenant au moins une fonction méthacrylate et de préférence plusieurs fonctions méthacrylates.

Par exemple, la composition liquide comprend au moins un monomère ou un oligomère desdits composés (méth)acrylate de préférence polyfonctionnels, au moins un initiateur de polymérisation et l'agent colorant.

Avantageusement, l'agent colorant est présent dans la composition initiale (hormis le solvant) à raison d'une quantité comprise entre 5% et 70% par rapport à la masse totale des composés polymériques présents dans la couche de composé polymère, de préférence entre 20 et 50% par rapport à ladite masse totale. La couche polymérique 6 peut en outre comprendre un agent promoteur d'adhésion sur l'empilement de couches 5.

Le dépôt de la couche polymérique 6 sur l'empilement de couches 5 peut être effectué par application à température ambiante de la composition liquide décrite précédemment, par enduction au rouleau, par aspersion, par trempage, par enduction au rideau ou par pulvérisation, ou encore par des techniques de spin coating (enduction centrifuge).

La couche polymérique 6 est avantageusement ensuite durcie par séchage à une température inférieure à 200°C, par réticulation UV, ou par faisceau d'électrons.

L'épaisseur de la couche polymérique 6 séchée et/ou durcie peut être comprise entre 0,1 et 20 micromètres, typiquement entre 0,5 et 3 micromètres.

Selon un mode possible alternatif, en particulier si aucun agent promoteur d'adhésion n'est présente dans la composition initiale, on peut préalablement traiter la surface de l'empilement de couches sur laquelle est déposée la couche polymérique colorée par un agent promoteur d'adhésion.

Selon l'invention, la couche de polymère sert de matrice à un colorant (ou agent colorant) spécifiquement choisi pour ses qualités d'absorption de la lumière située dans le domaine du visible (380-780 nm) mais également sensiblement transparent aux infrarouges proches, notamment ceux compris entre 780 et 2000 nm.

Par absorbant la lumière visible, on entend notamment que ledit colorant absorbe la majeure partie, par exemple au moins 60% ou même plus de 70 ou même plus de 80%, voire sensiblement la totalité de la lumière visible. De même, par transparent aux infrarouges ou sensiblement transparent aux infrarouges, on entend que ledit colorant laisse passer la majeure partie, par exemple au moins 60% ou même plus de 70, 80 ou même 90% des infrarouges, voire sensiblement la totalité de l'infrarouge.

Selon un mode de réalisation avantageux, de tels agent colorant sont les composés de la gamme Epolight 7527^{®}, en particulier les composés 7527B et Epolight 7527C commercialisés par la société Epolin. (https://www.epolin.com/epolight-voirt-dyes-for-solvent-based-systems/).

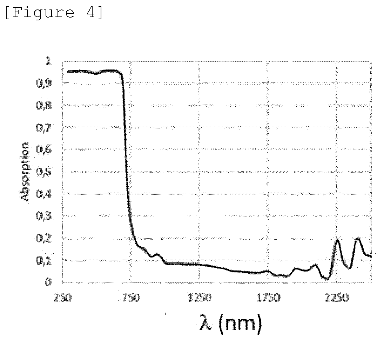

La figure 4 ci-dessous montre le spectre d'absorption du composé Epolight 7527C dans une couche d'acrylate à une concentration de 1% massique, à titre d'exemple. L'absorbance mesurée entre 380 et 780 nm est de 0,79 et l'absorbance mesurée entre 780 et 2000 nm est de 0,08.

Selon une autre possibilité, on peut choisir alternativement les colorants du type Sudan et en particulier le colorant Sudan Black B, dont la formule développée est donnée ci-dessous :

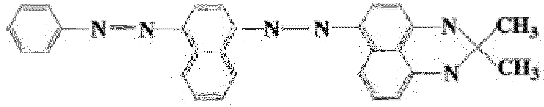

Bien entendu, la présente invention n'est pas limitée à de tels composés et tout colorant présentant, dans sa matrice, un faible coefficient d'absorption des infrarouges compris entre 780 nm et 2000 nm, et un fort coefficient d'absorption dans le domaine du visible peut être utilisé selon l'invention. Le colorant utilisé est donc en principe noir mais on peut également utiliser des colorants qui n'absorbent pas la totalité de la lumière visible mais au moins 60%, au moins 70%, voire au moins 80% de celle-ci, et qui présente de ce fait une légère coloration, bien que sombre.

Avantageusement, ledit colorant est choisi pour respecter les critères d'absorbance et de coefficient d'extinction décrits précédemment.

Utilisé comme vitrage feuilleté notamment pour une application comme toit vitré pour automobile, le vitrage selon l'invention permet de résoudre le problème technique précédemment décrit grâce à sa structure particulière. Il permet en particulier de cumuler les avantages suivants :
- un faible coût des matériaux entrant dans sa composition puisqu'il ne contient pas les éléments les plus onéreux présents dans les structures actuelles (en particulier pas de PVB initialement coloré dans sa masse, pas de verre coloré dans sa masse) et donc un faible coût de fabrication. En outre, les dépôts par voie liquide utilisables selon l'invention sont en général peu coûteux du fait d'une grande vitesse de ligne et les colorants utilisés sont commerciaux et peu onéreux ;
- la possibilité d'ajuster la transmission lumineuse du vitrage en ajustant la concentration massique de colorant dans la couche polymérique jusqu'à des valeurs pouvant aller jusqu'à 5% voire 10% du poids total de ladite couche ;
- des propriétés de contrôle solaire optimales du vitrage feuilleté obtenues :
   a) grâce à la présence sur la première feuille de verre d'un l'empilement qui réfléchit l'infrarouge solaire mais laisse passer une majeure partie du rayonnement dans le domaine du visible,
   b) en raison de la nature et du positionnement de l'agent colorant au sein du vitrage : la majeure partie de la portion infrarouge du spectre solaire est réfléchi par les empilements de couches puis le rayonnement résiduel, comprenant pour l'essentiel la portion visible dudit rayonnement est partiellement absorbée par la couche comprenant l'agent colorant, en fonction de sa concentration dans ladite couche. L'infrarouge n'atteignant pas ladite couche, on n'observe pas d'échauffement supplémentaire du vitrage et par suite de l'habitacle du véhicule. Le vitrage présente par conséquent une faible valeur de la TTS. De même, en hiver le vitrage permet une bonne isolation de l'habitacle grâce à la présence des empilements de couches réfléchissant l'infrarouge thermique.

L'empilement de couches et la concentration du colorant sont avantageusement choisis en combinaison pour laisser passer une quantité suffisamment importante de lumière pour éclairer suffisamment l'espace intérieur et maintenir ainsi un confort visuel et une sensation de confort.

On donne ci-après un exemple de réalisation d'un vitrage selon l'invention :

### A- Fabrication d'une structure selon l'invention :

On prépare un échantillon A d'une structure telle que décrite précédemment en relation avec la figure 1, de dimensions 10 × 10 cm².

L'échantillon A est obtenue de la manière suivante :
- On dépose sur un premier verre clair d'épaisseur 2,1 mm commercialisé par la société déposante sous la référence Planiclear^{®} (T_{L} d'environ 90%, non coloré) un empilement de couches par les techniques de pulvérisation cathodique assistée par magnétron. L'empilement comprend trois couches d'argent et est décrit dans l'exemple 14 de la publication WO2005051858. Sa résistance par carré est de 1,0 Ohm/carré, telle que mesurée à l'aide d'un appareil type SRM-14T de Nagy Mess Systems).

Un feuillet en PVB clair d'épaisseur 0,76 mm, commercialisé sous la référence Saflex RK11 ^{®} par la société Eastman, est posé sur la première feuille de verre revêtue de l'empilement et une deuxième feuille de verre clair, munie d'un deuxième empilement identique au premier, est apposée sur l'intercalaire de façon à refermer le vitrage feuilleté avec ledit deuxième empilement disposé sur la face de la deuxième feuille de verre opposé à celle collée au PVB. L'ensemble est placé sous autoclave pendant 30 minutes, à 130°C sous une pression de 12 bars.

Sur ce second empilement de couches minces, on dépose une composition liquide de la composition suivante :
- un oligomère acrylate aliphatique hexa-fonctionnel (ci-après oligomère acrylate 6 fonctions) ayant une masse moléculaire de 1450 g/mol, commercialisé par la société Sartomer sous la référence CN9010EU.
- un polyorganosiloxane modifié comportant une pluralité de (méth)acrylates ayant une masse moléculaire de 6500 g/mol, commercialisé par la société Byk sous la dénomination Byk 3505.
- un promoteur d'adhésion constitué par un monomère triacrylate du type acide commercialisé par la société Sartomer sous la dénomination SR9051.
- un photo-initiateur commercialisé par la société Lambson sous la dénomination Speedcure 500.

Le tableau qui suit indique les différentes proportions en les 4 ingrédients du mélange initial:

**[Tableau 1]**

| Formulation | Dénomination commerciale | Pourcentage poids |
|---|---|---|
| Oligomère acrylate | CN9010EU | 94 |
| Polyorganosiloxane | Byk 3505 | 0,5 |
| Promoteur d'adhésion | SR9051 | 0,5 |
| Photo-initiateur | Speedcure 500 | 5 |

Les 4 ingrédients, précurseurs de la matrice polymère initiale, sont dispersés dans l'éthylméthylcétone (MEK), utilisé comme solvant.

Avant l'étape d'élimination du solvant, selon l'invention, le colorant Epolight 7527C décrit précédemment est additionnellement ajouté à la solution initiale.

On effectue un mélange comprenant 12% poids du mélange de précurseurs et 5% poids dudit colorant avec 83% poids de MEK.

La composition liquide ainsi obtenue est filtrée avec un filtre en PTFE de diamètre 0,2 micromètres puis est déposée sur le substrat de verre revêtue de l'empilement par spin coating jusqu'à atteindre une épaisseur de 5 micromètres. La couche ainsi obtenue est durcie par irradiation UV (dose UVB d'environ 280 mJ/cm², vitesse de défilement de 10 m/min). L'épaisseur de la couche colorée séchée finale est d'environ 1 micromètres.

### B- Caractérisation du vitrage selon l'invention :

Les caractérisations optiques du vitrage tel que décrit précédemment sont réalisées avec un spectrophotomètre Lambda900 de la société Perkin Elmer.

Les facteurs lumineux (T_{L} et R_{L}) ont été mesurés selon la norme ISO9050 (2003).

La transmission totale solaire (TTS) a été mesurée selon la norme ISO 13837 avec la convention "A" AM 1.5.

L'émissivité a été calculée selon les critères définis dans la norme internationale NF EN 12898 : 2001. Dans le cadre de l'exemple exposé ci-après, on considère qu'une émissivité jusqu'à 30 % est satisfaisante et qu'au-delà le matériau ne peut plus être utilisé de manière satisfaisante comme vitrage isolant.

On reporte dans le tableau 2 ci-après les principales données colorimétrie du vitrage selon l'invention lorsque le colorant Epolight 7527C est utilisé :

**[Tableau 2]**

| Facteurs lumineux - Emissivité normale - TTS | | | |
|---|---|---|---|
| % poids colorant (matière sèche) | εₙ | TTS | T_{L} |
| 30 | 28,0 | 7 | 1 |

La transmission lumineuse T_{L} est en outre efficacement réduite par la couche colorée, la TL étant mesurée à 1% pour une concentration de 30% en agent colorant. Le vitrage feuilleté obtenu apparait visuellement bleu foncé en transmission, depuis l'intérieur de l'habitacle.

Le TTS mesurée est inférieure à 20%, sensiblement égale, voire inférieure, aux valeurs obtenues pour les configurations de l'art antérieur précédemment décrites et basées sur l'utilisation de PVB et/ou de verre coloré.

Selon l'invention, il apparaît possible de moduler la transmission lumineuse et la transmission totale énergétique du vitrage en agissant sur la concentration d'agent colorant, jusqu'à des niveaux pouvant aller jusqu'à des T_{L} de l'ordre de 1% et une TTS inférieure à 10%.

## Revendications

1. Vitrage feuilleté (10) comprenant deux feuilles en verre dont au moins une première feuille de verre (1) et une seconde feuille de verre (4), liées l'une à l'autre au moyen d'un intercalaire (3), ledit vitrage comprenant la succession des éléments suivants
- ladite première feuille de verre (1), celle-ci étant constituée de verre clair,
- un premier empilement de couches (2) réfléchissant le rayonnement infrarouge, de préférence au contact de la surface intérieure de ladite première feuille (1) en verre clair,
- ledit intercalaire (3), de préférence constitué de PVB, de préférence déposé au contact dudit empilement de couches,
- ladite seconde feuille de verre (4),
- un second empilement de couches (5) réfléchissant le rayonnement infrarouge, au contact de la surface intérieure de ladite seconde feuille (4) en verre clair,
- une couche polymérique (6), ladite couche polymérique comprenant un agent colorant, ledit agent colorant absorbant la lumière située dans le domaine du visible entre 380 et 780 nm et étant transparent au rayonnement infrarouge de longueur d'onde supérieur à 780 nm, ladite couche polymérique étant de préférence directement au contact de l'environnement extérieur.

2. Vitrage feuilleté selon la revendication 1, dans lequel ledit colorant présente, tel que mesuré pour une couche de 40 micromètres dans un polymère de (meth)acrylate et à une concentration de 1% massique par un spectrophotomètre Perkin-Elmer lambda 950 sur un spectre d'absorption entre 380 et 2000 nm, une absorbance moyennée entre 780 et 2000 nm au moins 3 fois inférieure à l'absorbance moyennée entre 380 et 780 nm.

3. Vitrage monolithique selon la revendication 1 ou 2, dans lequel ledit colorant présente, à 25°C, un coefficient d'extinction molaire moyen entre 900 nm et 2000 nm au moins 3 fois inférieur au coefficient d'extinction molaire moyen entre 380 nm et 780 nm.

4. Vitrage feuilleté selon l'une des revendications précédentes, dans lequel l'empilement de couches réfléchissant le rayonnement infrarouge est un empilement comprenant au moins deux couches fonctionnelles à base d'argent et de préférence au moins 3 couches à base d'argent, séparées par des couches de matériaux diélectriques, en particulier par des oxydes ou des nitrures.

5. Vitrage feuilleté selon l'une des revendications précédentes, dans lequel ladite couche comprend, et de préférence est constitué essentiellement par, un composé polymérique choisi parmi les composés (métha)crylate, de préférence polyfonctionnels et comprenant au moins deux fonctions acrylates.

6. Vitrage feuilleté selon l'une des revendications précédentes, dans lequel la couche polymérique est obtenue par réticulation d'une composition polymérisable comprenant des composés (méth)acrylates, éventuellement un groupe polyorganosiloxane, éventuellement un amorceur de polymérisation, éventuellement un promoteur d'adhésion avec ledit empilement, dans lequel les composés (méth)acrylates comprennent et de préférence sont des composés (méth)acrylates à fonctionnalité élevée :
- ayant au moins 4 fonctions (méth)acrylates et représentant, en masse par rapport à la masse totale de la couche de protection organique, au moins 65 % ou
- ayant au moins 5 fonctions (méth)acrylates et représentant, en masse par rapport à la masse totale de la couche de protection organique au moins 50 %.

7. Vitrage feuilleté selon l'une des revendications précédentes dans lequel l'épaisseur de la couche polymérique est comprise entre 0,1 micromètres et 20 micromètres, en particulier entre 0,5 et 3 micromètres.

8. Vitrage feuilleté selon l'une 1 à 7, dans lequel l'agent colorant est choisi parmi le Sudan Black B^{®} (CAS 4197-25-5) ou la Nigrosine Solvent black 5 (CAS 11099-03-9), et de préférence est le Sudan Black B^{®}.

9. Vitrage feuilleté selon l'une des revendications précédentes, dans lequel l'agent colorant représente entre 5 et 70% poids de la couche de polymère, de préférence entre 20 et 50% poids de la couche de polymère.

10. Vitrage feuilleté selon l'une des revendications précédentes, dans lequel ladite seconde feuille de verre (4) est en verre clair et l'intercalaire (3) est coloré dans sa masse, en particulier est constitué de PVB teinté.

11. Vitrage feuilleté selon l'une des revendications 1 à 9, dans lequel ladite seconde feuille de verre (4) est en verre teinté dans sa masse et l'intercalaire (3) est incolore, en particulier est constitué de PVB non teinté.

12. Vitrage feuilleté selon l'une des revendications 1 à 9, dans lequel ladite seconde feuille de verre (4) est en verre clair et l'intercalaire (3) est incolore, en particulier est constitué de PVB non teinté.

13. Vitrage feuilleté selon l'une des revendications précédentes, **caractérisée en ce que** les feuilles de verre ont une épaisseur comprise entre 0,7 mm et 5 mm et de préférence entre 1,6 mm et 3,1 mm.

14. Utilisation d'un vitrage feuilleté selon l'une des revendications précédentes comme toit, vitre latérale, ou lunette arrière de véhicules automobiles.

## Patentansprüche

1. Verbundverglasung (10) umfassend zwei Glasscheiben, wobei mindestens eine erste Glasscheibe (1) und eine zweite Glasscheibe (4) mittels einer Zwischenlage (3) miteinander verbunden sind, die Verglasung umfassend die Abfolge der folgenden Elemente
- die erste Glasscheibe (1), wobei diese aus Klarglas besteht,
- einen ersten Stapel von Schichten (2), der Infrarotstrahlung reflektiert, vorzugsweise in Kontakt mit der Innenoberfläche der ersten Scheibe (1) aus Klarglas,
- die Zwischenlage (3), vorzugsweise bestehend aus PVB, die vorzugsweise in Kontakt mit dem Stapel von Schichten abgelagert ist,
- die zweite Glasscheibe (4),
- einen zweiten Stapel von Schichten (5), der die Infrarotstrahlung reflektiert, in Kontakt mit der Innenoberfläche der zweiten Scheibe (4) aus Klarglas,
- eine Polymerschicht (6), die Polymerschicht umfassend ein Färbemittel umfasst, wobei das Färbemittel Licht, das in dem sichtbaren Bereich zwischen 380 und 780 nm gelegen ist, absorbiert und für Infrarotstrahlung mit einer Wellenlänge über 780 nm transparent ist, wobei die Polymerschicht vorzugsweise direkt mit der äußeren Umgebung in Kontakt steht.

2. Verbundverglasung nach Anspruch 1, wobei der Farbstoff, wie gemessen für eine Schicht von 40 Mikrometer in einem (Meth)acrylat-Polymer und bei einer Konzentration von 1 Gew.-% durch ein Perkin-Elmer-Lambda-950-Spektrophotometer über ein Absorptionsspektrum zwischen 380 und 2000 nm, eine gemittelte Absorbanz zwischen 780 und 2000 nm aufweist, die mindestens 3-mal geringer als die gemittelte Absorbanz zwischen 380 und 780 nm ist.

3. Monolithische Verglasung nach Anspruch 1 oder 2, wobei der Farbstoff bei 25 °C einen mittleren molaren Extinktionskoeffizienten zwischen 900 nm und 2000 nm aufweist, der mindestens 3-mal geringer als der mittlere molare Extinktionskoeffizient zwischen 380 nm und 780 nm ist.

4. Verbundverglasung nach einem der vorstehenden Ansprüche, wobei der Stapel von Schichten, der Infrarotstrahlung reflektiert, ein Stapel ist, umfassend mindestens zwei funktionelle Schichten auf Silberbasis und vorzugsweise mindestens 3 Schichten auf Silberbasis, die durch dielektrische Materialschichten getrennt sind, insbesondere durch Oxide oder Nitride.

5. Verbundverglasung nach einem der vorstehenden Ansprüche, wobei die Schicht eine Polymerverbindung, ausgewählt aus den (Meth)acrylatverbindungen, vorzugsweise polyfunktionellen, und umfassend mindestens zwei Acrylatfunktionen, umfasst und vorzugsweise im Wesentlichen daraus besteht.

6. Verbundverglasung nach einem der vorstehenden Ansprüche, wobei die Polymerschicht durch Vernetzung einer polymerisierbaren Zusammensetzung erhalten wird, umfassend (Meth)acrylatverbindungen, optional eine Polyorganosiloxangruppe, optional einen Polymerisationsinitiator, optional einen Haftvermittler mit dem Stapel, wobei die (Meth)acrylatverbindungen (Meth)acrylatverbindungen mit erhöhter Funktionalität umfassen und vorzugsweise daraus sind:
- vorweisend mindestens 4 (Meth)acrylatfunktionen und die, in Masse relativ zu der Gesamtmasse der organischen Schutzschicht mindestens 65 % darstellen
oder
- vorweisend mindestens 5 (Meth)acrylatfunktionen und die, in Masse relativ zu der Gesamtmasse der organischen Schutzschicht mindestens 50 % darstellen.

7. Verbundverglasung nach einem der vorstehenden Ansprüche, wobei die durchschnittliche Dicke der Polymerschicht zwischen 0,1 Mikrometer und 20 Mikrometer, insbesondere zwischen 0,5 und 3 Mikrometer, liegt.

8. Verbundverglasung nach einem der Ansprüche 1 bis 7, wobei das Färbemittel ausgewählt ist aus Sudan Black B^{®} (CAS 4197-25-5) oder Nigrosine Solvent black 5 (CAS 11099-03-9) und vorzugsweise Sudan Black B^{®} ist.

9. Verbundverglasung nach einem der vorstehenden Ansprüche, wobei das Färbemittel zwischen 5 und 70 Gew.-% der Polymerschicht, vorzugsweise zwischen 20 und 50 Gew.-% der Polymerschicht, darstellt.

10. Verbundverglasung nach einem der vorstehenden Ansprüche, wobei die zweite Glasscheibe (4) aus Klarglas ist und die Zwischenlage (3) in ihrer Masse gefärbt ist, insbesondere aus getöntem PVB besteht.

11. Verbundverglasung nach einem der Ansprüche 1 bis 9, wobei die zweite Glasscheibe (4) in ihrer Masse aus getöntem Glas ist und die Zwischenlage (3) farblos ist, insbesondere aus nicht getöntem PVB besteht.

12. Verbundverglasung nach einem der Ansprüche 1 bis 9, wobei die zweite Glasscheibe (4) aus Klarglas ist und die Zwischenlage (3) farblos ist, insbesondere aus nicht getöntem PVB besteht.

13. Verbundverglasung nach einem der vorstehenden Ansprüche,
**dadurch gekennzeichnet, dass** die Glasscheiben eine Dicke, die zwischen 0,7 mm und 5 mm, und vorzugsweise zwischen 1,6 mm und 3,1 mm liegt, aufweisen.

14. Verwendung einer Verbundverglasung nach einem der vorstehenden Ansprüche als Dach, Seitenfenster oder Heckscheibe von Kraftfahrzeugen.

## Claims

1. A laminated glazing (10) comprising two glass sheets including at least a first glass sheet (1) and a second glass sheet (4), bonded to one another by means of an interlayer (3), said glazing comprising the succession of the following elements
- said first glass sheet (1), which consists of clear glass,
- a first stack of layers (2) reflecting infrared radiation, preferably in contact with the inner surface of said first clear glass sheet (1),
- said interlayer (3), preferably made of PVB, preferably deposited in contact with said stack of layers,
- said second glass sheet (4),
- a second stack of layers (5) reflecting infrared radiation, in contact with the inner surface of said second clear glass sheet (4),
- a polymeric layer (6), said polymeric layer comprising a coloring agent, said coloring agent absorbing light in the visible range between 380 and 780 nm and being transparent to infrared radiation of wavelength greater than 780 nm, said polymeric layer preferably being in direct contact with the external environment.

2. The laminated glazing according to claim 1, wherein said dye has, as measured for a 40 micrometer layer in a (meth)acrylate polymer and at a concentration of 1% by weight by a Perkin-Elmer Lambda 950 spectrophotometer on an absorption spectrum between 380 and 2000 nm, an absorbance averaged between 780 and 2000 nm at least 3 times lower than the absorbance averaged between 380 and 780 nm.

3. A monolithic glazing according to claim 1 or 2, wherein said dye has, at 25°C, an average molar extinction coefficient between 900 nm and 2000 nm at least 3 times lower than the average molar extinction coefficient between 380 nm and 780 nm.

4. The laminated glazing according to one of the preceding claims, wherein the stack of layers reflecting infrared radiation is a stack comprising at least two silver-based functional layers and preferably at least 3 silver-based layers, separated by layers of dielectric materials, in particular oxides or nitrides.

5. The laminated glazing according to one of the preceding claims, wherein said layer comprises, and preferably consists essentially of, a polymeric compound chosen from (meth)acrylate compounds, preferably polyfunctional and comprising at least two acrylate functions.

6. The laminated glazing according to one of the preceding claims, wherein the polymeric layer is obtained by crosslinking a polymerizable composition comprising (meth)acrylate compounds, optionally a polyorganosiloxane group, optionally a polymerization initiator, optionally an adhesion promoter with said stack, wherein the (meth)acrylate compounds comprise and preferably are high functionality (meth)acrylate compounds:
- having at least four (meth)acrylate functions and representing, by weight in relation to the total weight of the organic protective layer, at least 65% or
- having at least five (meth)acrylate functions and representing, by weight relative to the total weight of the organic protective layer, at least 50%.

7. The laminated glazing according to one of the preceding claims, wherein the thickness of the polymeric layer is between 0.1 and 20 µm, especially between 0.5 and 3 µm.

8. The laminated glazing according to one of claims 1 to 7, wherein the coloring agent is selected from Sudan Black B^{®} (CAS 4197-25-5) or Nigrosine Solvent black 5 (CAS 11099-03-9), and preferably is Sudan Black B^{®}.

9. The laminated glazing according to one of the preceding claims, wherein the coloring agent represents between 5 and 70% by weight of the polymer layer, preferably between 20 and 50% by weight of the polymer layer.

10. The laminated glazing according to one of the preceding claims, wherein said second glass sheet (4) is made of clear glass and the interlayer (3) is colored in its mass, and in particular consists of tinted PVB.

11. The laminated glazing according to one of claims 1 to 9, wherein said second glass sheet (4) is made of glass tinted in its mass and the interlayer (3) is colorless, in particular consisting of untinted PVB.

12. The laminated glazing according to one of claims 1 to 10, wherein said second glass sheet (4) is made of clear glass and the interlayer (3) is colorless, in particular made of untinted PVB.

13. The laminated glazing according to one of the preceding claims, **characterized in that** the glass sheets have a thickness of between 0.7 and 5 mm, and preferably between 1.6 mm and 3.1 mm.

14. The use of a laminated glazing according to one of the preceding claims as a rear window, side window or roof window of a motor vehicle.
